# EUROPEAN PATENT SPECIFICATION

(11) **EP 4 616 094 B1**
(45) Date of publication and mention of the grant of the patent: **17.06.2026**
(21) Application number: 23790034.5
(22) Date of filing: 19.10.2023
(51) Int. Cl.: F16K 17/34, F16K 17/36

(54) **SHUT-OFF VALVE**
ABSPERRVENTIL
VANNE D'ARRÊT

(30) Priority: 07.11.2022 IT 202200022818
(43) Date of publication of application: 17.09.2025
(73) Proprietor: Truma Gerätetechnik GmbH & Co. KG, 85640 Putzbrunn (DE)
(72) Inventor: PELI, Claudio, 25030 Torbole Casaglia (BS) (IT); PERONI, Davide, 25064 Gussago (BS) (IT)
(74) Representative: Prinz & Partner mbB
(86) International application number: PCT/EP2023/079092
(87) International publication number: WO 2024/099729

(56) References cited:
- EP-A1- 3 822 524
- JP-U- S4 862 631
- US-A- 4 278 102

## Description

The present invention refers to a shut-off valve.

In the state of art valves are known that interrupt the flow of a gas if a hose or pipe is ruptured or if a flow rate exceeds a threshold. Other valves interrupt the flow in case of a crash or of a tilting of the valve. Usually, every function requires a separate component.

Document US 4,278,102 A describes a shut-off valve that interrupts the flow of a gaseous or liquid fuel after a shock or a vibration usually caused by an earthquake. For this purpose, a ball is used as an inertia body. The flow is also interrupted due to a surge of the velocity of the fuel. For a reset of the valve, a cap has to be removed in order to replace the ball on a pedestal.

Document JP S48 62631 U provides a shut-off valve with an indicator pin. In order to reset the valve, the indicator pin has to be pushed downwards into the housing of the valve.

An object of the invention is to provide a shut-off valve that interrupts the gas flow in reaction to different dangerous situations.

The object is achieved by a shut-off valve comprising an inlet, an outlet, a flow path, a closing element, a closing element seat, a closing element spring, an inertia body, and a reset component, wherein the flow path connects the inlet to the outlet, wherein in case that the closing element is in a closing position relative to the closing element seat, the flow path is closed, wherein a force of the closing element spring acts on the closing element towards the closing element seat, wherein the inertia body is configured to move by itself from a rest position to a safety position if a force acting on the inertia body exceeds a given force value and/or if a tilting of the shut-off valve exceeds a given angle, wherein the inertia body being in the rest position hampers a movement of the closing element towards the closing element seat, wherein the closing element moves the inertia body away from the rest position if a gas flow in the flow path exceeds a given flow value, and wherein the reset component moves the inertia body from the safety position to the rest position, wherein the reset component comprises a reset pin, an indicator plug and an indicator housing, wherein the reset pin and the indicator plug are connected to each other, wherein a movement of the reset pin and the indicator plug pushes the inertia body towards the rest position, and wherein the indicator housing at least partially covers the indicator plug in case that the inertia body is in the rest position.

The flow path connects the inlet to the outlet, so that the gas flows along the flow path. The closing element closes the flow path and, thus, interrupts the gas flow in case of extraordinary situations. One situation is given when the gas flow is greater than a given flow value. Such an increase of the flow of gas happens if a rupture of a gas pipe with which the valve is connected has occurred. Two other situations are a tilting of the valve or an acceleration force acting on the valve. Both situations can be the result of an accident happening to the surrounding - e.g. a caravan - in which the valve is used. For the detection at least one of the two situations, the inertia body is used. The inertia body moves from a rest position to a safety position in case of an acting force exceeding a given force value and/or in case of a tilting exceeding a given tilting angle.

The closing element interrupts the gas flow when it is in a closing position relative to the closing element seat. The force of the closing element spring pushes the closing element towards the closing element seat, whereas the inertia body in the rest position impedes a movement of the closing element towards the closing element seat. Thus, there a two possibilities that the closing element reaches the closing position: either the closing element is pushed by the gas far enough to overcome the resistance of the inertia body or the inertia body leaves the rest position allowing the closing element spring to push the closing element towards the closing position. The closing element seat comprises, for example, a narrow and a sealing like an O-ring.

The reset component allows to reset the valve and to open the flow path for the flow of gas. This is done by moving the inertia body from the safety position to the rest position. By this, the closing element is also pushed back from the closing position. Hence, the shut-off valve reacts to at least two situations by interrupting the gas flow.

The reset component not only allows to open the valve but also indicates whether the valve is open. A reset pin and an indicator plug serve for opening the flow path. They are connected to each other and a movement of them pushes the inertia body towards the rest position and, in consequence, the closing element away from the closing position. The activation of the shut-off feature of the valve is shown because the indicator housing does not cover the indicator plug as in the normal situation with the open valve.

According to an embodiment, the closing element is located within the flow path, the closing element comprises a base end directed towards the inlet, and the closing element spring is located between the base end of the closing element and a pedestal. The closing element has a broad base area against which the gas flow is directed. The closing element spring is located within the gas flow and is located between the base end and a pedestal.

In an embodiment, the shut-off valve further comprises a housing, the housing encompasses a chamber, the inertia body is located within the chamber, the inertia body has a larger and a smaller end side, the chamber and the flow path are connected by an opening to each other, the closing element reaches through the opening into the chamber, and the larger end side of the inertia body is directed towards the closing element. The inertia body is located within a chamber of a housing. Due to the connection by the opening between the flow path and the chamber, the gas also enters the chamber. Preferably, the opening is located downstream to the closing element seat. Hence, if the flow path is interrupted the pressure in the chamber will drop because the gas leaves the valve through the outlet. The closing element reaches through the opening into the chamber and can, thus, interact with the inertia body. In an example, the inertia body rests on top of the closing element. The form of the inertia body with a larger and a smaller end side (for example given by a conical frustrum or by a truncated pyramid with a hexagonal or octagonal base or with a spherical cap) helps to define the kind of force which can cause the movement of the inertia body and, accordingly, the shut-off of the valve. The force is preferably the effect of a crash or a tilting of a moving caravan. The inertia body in this embodiment differs from a sphere.

In a further embodiment, the closing element has a form comparable to an elongated drop with a flattened base.

In an embodiment, the reset component further comprises a reset housing, a die and a die spring, the reset housing encompasses a pressure chamber, the pressure chamber is connected to the chamber encompassing the inertia body, the die is located within the pressure chamber, the die and the indicator housing are connected to another, and a force of the die spring acts on the die towards an interior of the pressure chamber. In this embodiment, the chamber in which the inertia body is located is connected to a pressure chamber belonging to the reset component. The connection allows gas to flow from the chamber to the pressure chamber. The pressure in this pressure chamber pushes the indicator housing away from the reset housing and, thus, towards the indicator plug. Hence, the gas in the pressure chamber ensures that the indicator plug is surrounded by the indicator housing. If the gas flows out of the pressure chamber and the pressure decreases, the die spring pulls the indicator housing towards the reset housing and, thus, away from the indicator plug.

According to an embodiment, the indicator housing comprises a front region, and a size of the front region and a size of the indicator plug are matched to each other, that at least a part of the indicator plug fits into the front region, the indicator housing comprises a back region, and a size of the back region and a size of a front end of the reset housing are matched to each other, that at least a part of the front end fits into the back region. In an embodiment, the front region of the indicator housing has an opening with an inner diameter greater than the outer diameter of the indicator plug. This allows the indicator plug to be surrounded by the indicator housing and, thus, to be less prominent and visible during the normal situation. In this embodiment, the indicator housing comprises a back region that is larger than the front end of the reset housing. Thus, if the indicator housing is moved backwards towards the reset housing, the back region partially covers the front end of the reset housing. In a further embodiment, the back region comprises an opening with an inner diameter larger than the outer diameter of the front end of the housing.

In detail, there is a plurality of possibilities to design and further develop the shut-off valve. Reference is made to the following description of a preferred embodiment in conjunction with the drawing.

It shows:
- Fig. 1: a sectional drawing of an inventive shut-off valve in a normal state and
- Fig. 2: the valve of Fig. 1 in an activated state.

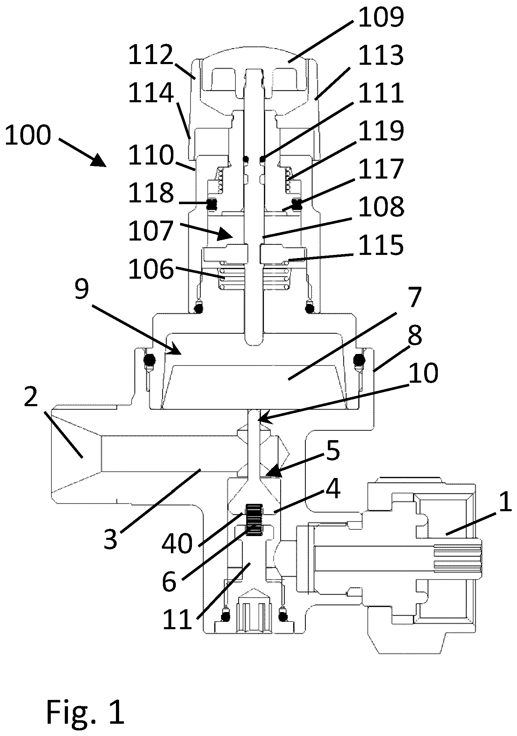

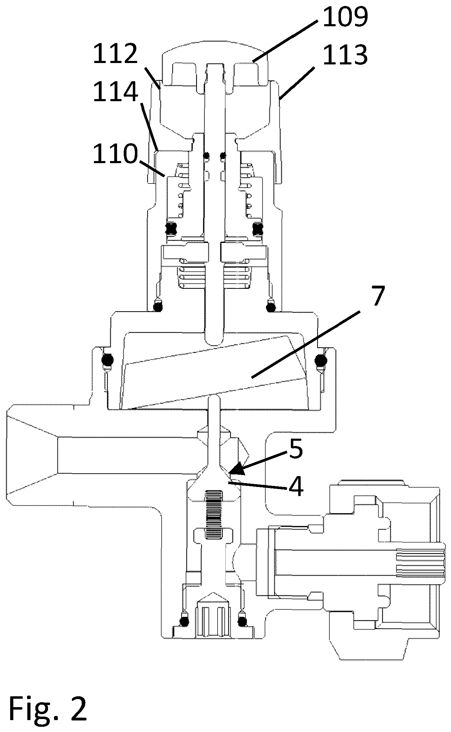

Fig. 1 and Fig. 2 show an embodiment of the inventive valve in two different states. Fig. 1 shows the normal state in which gas flows along the flow path 3 from the inlet 1 to the outlet 2. In Fig. 2, the shut-off feature of the valve is activated and the gas flow is interrupted. Both figures are described jointly in the following.

The valve comprises a housing 8 and a reset housing 110. The housing 1 comprises the inlet 1 and the outlet 2 for the gas. The reset housing 110 belongs to the reset component 100. Within the flow path 3 a pedestal 11, a closing element spring 6, and the closing element 4 are located. The closing element 4 has a broad base end 40 followed by a conical section and ends in a comparable thin pin-like section. This pin-section reaches through a narrow along the flow path 3. The narrow forms the closing element seat 5. This closing element seat 5 and the closing element 4 are matched so that the flow of the gas is interrupted when the closing element 4 is in the closing position (see Fig. 2). The closing element spring 6 pushes the closing element 4 towards this closing position. The closing element spring 6 is located between and also partially within the base end 40 and the pedestal 11.

For the flow of the gas - as shown in Fig. 1 - the force of the closing element spring 6 is counterbalanced by the inertia body 7 that rests on the closing element 4 and prevents a - here upward - movement of the closing element 4. The inertia body 7 is located within the chamber 9 of housing 8 that is connected by the opening 10 to the flow path 3. Hence, by the opening 10 at one hand the closing element 4 and the inertia body 7 interact with another and at the other hand the gas flows also into the chamber 9. The inertia body 7 has in the shown embodiment a form of a conical frustrum.

There are two possibilities that the closing element 4 can reach the closing position: either the gas flow is increased beyond a given flow value or the inertia body 7 leaves the rest position.

In the first case, the closing element 4 moves upwards and pushes the inertia body 7 away from the rest position. The required flow to move the closing element 4 towards the closing position depends at least on the weight of the inertia body 7 and on the force of the closing element spring 6.

In the second case, the inertia body 7 moves itself from the rest position (see Fig. 1) to a safety position (see Fig. 2). In the safety position the inertia body 7 does not rest upon the opening 10, so that the closing element 4 can be pushed upwards by the closing element spring 6.

The inertia body 7 moves itself to the safety position as an effect of external forces acting on the valve. Considered may be the case that the valve is used within a caravan. Due to an accident the caravan can experience a great acceleration force or even can be tilted.

The inertia body 7 reacts to a force greater than a given force value and to a tilting angle greater than a given value. Hence, in the case of an accident, the inertia body 7 moves towards the safety position allowing the closing element spring 6 to push the closing element 4 towards the closing element seat 5 (see Fig. 2).

In order to open and to reset the valve, the reset component 100 is used manually by a user. The user pushes the indicator plug 109 downwards. By this, the inertia body 7 is pushed back to its rest position and the closing element 4 is pushed away from the closing element seat 5.

The reset component 100 has the reset housing 110 that is fixed to the housing 8. Further, there is a connection for allowing the gas to enter via the chamber 9 the interior of the reset housing 110. As the chamber 9 is located downstream to the closing element seat 5, there is only gas within the chamber 9 and within the reset housing 110 if the flow path 3 is open (see Fig. 1).

The reset housing 110 comprises a pressure chamber 107 that is connected to the chamber 9. A reset pin 108 can be moved downwards along an axis of the reset housing 110. The length of the reset pin 108, the size of the inertia body 7 and the dimensions of the chamber 9 are matched so that a downward movement of the reset pin 108 pushes the inertia body 7 from the safety position to the rest position.

The - in the shown embodiment rod-like - reset pin 108 is connected at one end to the indicator plug 109. A disk 115 is fixed to the reset pin 108. During a reset movement, the disk 115 compresses a reset spring 106 being located between a shoulder of the housing 8 and the disk 115.

In the pressure chamber 107 is a die 117 moveably arranged. If the pressure in the pressure chamber 107 is greater than a given value, the die 117 will - against the force of the die spring 119 - be moved upwards. As the die 117 is connected to the indicator housing 113, the indicator plug 109 becomes more and more radially surrounded by a front region 112 of the indicator housing 113. Hence, the gas within the pressure chamber 107 pushes the indicator housing 113 towards the indicator plug 109 whose position is not affected by the gas pressure. The front region 112 of the indicator housing 113 has an opening with inner diameter larger than the outer diameter of the indicator plug 109.

The indicator housing 113 in the shown embodiment further comprises a back region 114 which has an opening larger than the corresponding front end of the reset housing 110. Hence, the back region 114 of the indicator housing 113 is moved over the front end of the reset housing 110 if the pressure in the pressure chamber 107 is not greater than the given value.

Thus, during the normal situation of the valve, the indicator plug 109 is less visible as it is partially covered by the indicator housing 113. If the valve is closed, the indicator housing 113 moves backwards and the visible indicator plug 109 indicates that the safety function has been activated. In order to increase the contrast, the indicator plug 109 has preferably a bright color (e.g. yellow) and the indicator housing 113 sports a darker color (e.g. black). Both, indicator plug 109 and indicator housing 113 are located outside of the reset housing 110.

The reset pin 108 reaches through a passage within the die 117. A seal 111 surrounds the reset pin 108 within this passage. The reset pin 108 can be moved relative to the die 117 and relative to the indicator housing 113. The die 117 carries in the pressure chamber 107 a seal 118 sealing the opening between the die 117 and the inner wall of the pressure chamber 107.

### List of reference signs

- 1: inlet
- 2: outlet
- 3: flow path
- 4: closing element
- 5: closing element seat
- 6: closing element spring
- 7: inertia body
- 8: housing
- 9: chamber
- 10: opening
- 11: pedestal
- 40: base end
- 100: reset component
- 106: reset spring
- 107: pressure chamber
- 108: reset pin
- 109: indicator plug
- 110: reset housing
- 111: seal
- 112: front region
- 113: indicator housing
- 114: back region
- 115: disk
- 117: die
- 118: seal
- 119: die spring

## Claims

1. Shut-off valve comprising an inlet (1), an outlet (2), a flow path (3), a closing element (4), a closing element seat (5), a closing element spring (6), an inertia body (7), and a reset component (100),
wherein the flow path (3) connects the inlet (1) to the outlet (2),
wherein in case that the closing element (4) is in a closing position relative to the closing element seat (5), the flow path (3) is closed,
wherein a force of the closing element spring (6) acts on the closing element (4) towards the closing element seat (5),
wherein the inertia body (7) is configured to move by itself from a rest position to a safety position if a force acting on the inertia body (7) exceeds a given force value and/or if a tilting of the shut-off valve exceeds a given angle,
wherein the inertia body (7) being in the rest position hampers a movement of the closing element (4) towards the closing element seat (5),
wherein the closing element (4) moves the inertia body (7) away from the rest position if a gas flow in the flow path (3) exceeds a given flow value,
wherein the reset component (100) moves the inertia body (7) from the safety position to the rest position,
**characterised in that**
the reset component (100) comprises a reset pin (108), an indicator plug (109) and an indicator housing (113),
wherein the reset pin (108) and the indicator plug (109) are connected to each other,
wherein a movement of the reset pin (108) and the indicator plug (109) pushes the inertia body (7) towards the rest position, and
wherein the indicator housing (113) at least partially covers the indicator plug (109) in case that the inertia body (7) is in the rest position.

2. Shut-off valve according to claim 1,
wherein the shut-off valve further comprises a housing (8),
wherein the housing (8) encompasses a chamber (9),
wherein the inertia body (7) is located within the chamber (9),
wherein the inertia body (7) has a larger and a smaller end side,
wherein the chamber (9) and the flow path (3) are connected by an opening (10) to each other,
wherein the closing element (4) reaches through the opening (10) into the chamber (9), and
wherein the larger end side of the inertia body (7) is directed towards the closing element (4).

3. Shut-off valve according to claim 1 or 2,
wherein the reset component (100) further comprises a reset housing (110), a die (117) and a die spring (119),
wherein the reset housing (110) encompasses a pressure chamber (107),
wherein the pressure chamber (107) is connected to the chamber (9) encompassing the inertia body (7),
wherein the die (117) is located within the pressure chamber (107),
wherein the die (117) and the indicator housing (113) are connected to another, and
wherein a force of the die spring (119) acts on the die (117) towards an interior of the pressure chamber (107).

4. Shut-off valve according to any of claims 1 to 3,
wherein the indicator housing (113) comprises a front region (112), and
wherein a size of the front region (112) and a size of the indicator plug (109) are matched to each other, that at least a part of the indicator plug (109) fits into the front region (112),
wherein the indicator housing (113) comprises a back region (114), and
wherein a size of the back region (114) and a size of a front end of the reset housing (110) are matched to each other, that at least a part of the front end fits into the back region (114).

5. Shut-off valve according to any of claims 1 to 4,
wherein the closing element (4) is located within the flow path (3),
wherein the closing element (4) comprises a base end (40) directed towards the inlet (1), and
wherein the closing element spring (6) is located between the base end (40) of the closing element (4) and a pedestal (11).

## Patentansprüche

1. Absperrventil
mit einem Einlass (1), einem Auslass (2), einem Strömungsweg (3), einem Schließelement (4), einem Schließelementsitz (5), einer Schließelementfeder (6), einem Trägheitskörper (7) und einer Rückstellkomponente (100),
wobei der Strömungsweg (3) den Einlass (1) mit dem Auslass (2) verbindet,
wobei in dem Fall, dass sich das Schließelement (4) in einer Schließstellung relativ zum Schließelementsitz (5) befindet, der Strömungsweg (3) geschlossen ist,
wobei eine Kraft der Schließelementfeder (6) auf das Schließelement (4) in Richtung auf den Schließelementsitz (5) wirkt,
wobei der Trägheitskörper (7) so ausgebildet ist, dass er sich selbsttätig aus einer Ruhestellung in eine Sicherheitsstellung bewegt, wenn eine auf den Trägheitskörper (7) wirkende Kraft einen vorgegebenen Kraftbetrag überschreitet und/oder wenn ein Kippen des Absperrventils einen vorgegebenen Winkel überschreitet,
wobei der in der Ruhestellung befindliche Trägheitskörper (7) eine Bewegung des Schließelements (4) in Richtung auf den Schließelementsitz (5) hemmt,
wobei das Schließelement (4) den Trägheitskörper (7) von der Ruhestellung wegbewegt, wenn eine Gasströmung im Strömungsweg (3) einen vorgegebenen Strömungswert überschreitet,
wobei die Rückstellkomponente (100) den Trägheitskörper (7) aus der Sicherheitsstellung in die Ruhestellung bewegt,
**dadurch gekennzeichnet, dass** die Rückstellkomponente (100) einen Rückstellstift (108), einen Anzeigestopfen (109) und ein Anzeigegehäuse (113) umfasst,
wobei der Rückstellstift (108) und der Anzeigestopfen (109) miteinander verbunden sind, wobei der Trägheitskörper (7) durch eine Bewegung des Rückstellstifts (108) und des Anzeigestopfens (109) zur Ruhestellung hin geschoben wird, und
wobei das Anzeigegehäuse (113) in dem Fall, dass sich der Trägheitskörper (7) in der Ruhestellung befindet, den Anzeigestopfen (109) zumindest teilweise abdeckt.

2. Absperrventil nach Anspruch 1,
wobei das Absperrventil ferner ein Gehäuse (8) umfasst,
wobei das Gehäuse (8) eine Kammer (9) umschließt,
wobei sich der Trägheitskörper (7) in der Kammer (9) befindet,
wobei der Trägheitskörper (7) eine Seite mit einem größeren und eine Seite mit einem kleineren Ende aufweist,
wobei die Kammer (9) und der Strömungsweg (3) über eine Öffnung (10) miteinander verbunden sind,
wobei das Schließelement (4) durch die Öffnung (10) in die Kammer (9) hineinreicht und
wobei die Seite des größeren Endes des Trägheitskörpers (7) dem Schließelement (4) zugewandt ist.

3. Absperrventil nach Anspruch 1 oder 2,
wobei die Rückstellkomponente (100) ferner ein Rückstellgehäuse (110), einen Stempel (117) und eine Stempelfeder (119) umfasst,
wobei das Rückstellgehäuse (110) eine Druckkammer (107) umschließt,
wobei die Druckkammer (107) mit der den Trägheitskörper (7) umschließenden Kammer (9) verbunden ist,
wobei sich der Stempel (117) in der Druckkammer (107) befindet,
wobei der Stempel (117) und das Anzeigegehäuse (113) miteinander verbunden sind und wobei eine Kraft der Stempelfeder (119) auf den Stempel (117) in Richtung auf einen Innenraum der Druckkammer (107) wirkt.

4. Absperrventil nach einem der Ansprüche 1 bis 3,
wobei das Anzeigegehäuse (113) einen vorderen Bereich (112) umfasst und
wobei eine Größe des vorderen Bereichs (112) und eine Größe des Anzeigestopfens (109) so aufeinander abgestimmt sind, dass zumindest ein Teil des Anzeigestopfens (109) in den vorderen Bereich (112) passt,
wobei das Anzeigegehäuse (113) einen hinteren Bereich (114) umfasst und
wobei eine Größe des hinteren Bereichs (114) und eine Größe eines vorderen Endes des Rückstellgehäuses (110) so aufeinander abgestimmt sind, dass zumindest ein Teil des vorderen Endes in den hinteren Bereich (114) passt.

5. Absperrventil nach einem der Ansprüche 1 bis 4,
wobei sich das Schließelement (4) im Strömungsweg (3) befindet,
wobei das Schließelement (4) ein zum Einlass (1) weisendes Basisende (40) umfasst und
wobei sich die Schließelementfeder (6) zwischen dem Basisende (40) des Schließelements (4) und einem Sockel (11) befindet.

## Revendications

1. Vanne d'arrêt
comprenant une entrée (1), une sortie (2), un passage d'écoulement (3), un élément de fermeture (4), un siège (5) d'élément de fermeture, un ressort (6) d'élément de fermeture, un corps d'inertie (7) et un composant de rappel (100),
le passage d'écoulement (3) reliant l'entrée (1) à la sortie (2),
le passage d'écoulement (3) étant fermé lorsque l'élément de fermeture (4) se trouve dans une position de fermeture par rapport au siège (5) d'élément de fermeture,
une force du ressort (6) d'élément de fermeture agissant sur l'élément de fermeture (4) en direction du siège (5) d'élément de fermeture,
le corps d'inertie (7) étant réalisé de manière à se déplacer de lui-même d'une position de repos à une position de sécurité si une force agissant sur le corps d'inertie (7) dépasse une valeur de force donnée et/ou si un basculement de la vanne d'arrêt dépasse un angle donné,
le corps d'inertie (7) se trouvant dans la position de repos qui empêche un mouvement de l'élément de fermeture (4) vers le siège (5) d'élément de fermeture,
l'élément de fermeture (4) éloignant le corps d'inertie (7) de la position de repos si un écoulement de gaz dans le passage d'écoulement (3) dépasse une valeur d'écoulement donnée,
le composant de rappel (100) déplaçant le corps d'inertie (7) de la position de sécurité vers la position de repos,
**caractérisé en ce que** le composant de rappel (100) comprend une goupille de rappel (108), un bouchon indicateur (109) et un boîtier indicateur (113),
la goupille de rappel (108) et le bouchon indicateur (109) étant reliés l'un à l'autre,
un mouvement de la goupille de rappel (108) et du bouchon indicateur (109) poussant le corps d'inertie (7) vers la position de repos, et
le boîtier indicateur (113) recouvrant au moins partiellement le bouchon indicateur (109) lorsque le corps d'inertie (7) se trouve dans la position de repos.

2. Vanne d'arrêt selon la revendication 1,
la vanne d'arrêt comprenant en outre un boîtier (8),
le boîtier (8) renfermant une chambre (9),
le corps d'inertie (7) se trouvant dans la chambre (9),
le corps d'inertie (7) présentant un côté d'extrémité plus large et un côté d'extrémité plus étroit,
la chambre (9) et le passage d'écoulement (3) étant reliés l'une à l'autre par une ouverture (10),
l'élément de fermeture (4) s'étendant à travers l'ouverture (10) dans la chambre (9), et
le côté d'extrémité plus large du corps d'inertie (7) étant dirigé vers l'élément de fermeture (4).

3. Vanne d'arrêt selon la revendication 1 ou 2,
le composant de rappel (100) comprenant en outre un boîtier de rappel (110), une matrice (117) et un ressort de matrice (119),
le boîtier de rappel (110) renfermant une chambre de pression (107),
la chambre de pression (107) étant reliée à la chambre (9) renfermant le corps d'inertie (7),
la matrice (117) se trouvant à l'intérieur de la chambre de pression (107),
la matrice (117) et le boîtier indicateur (113) étant reliés l'une à l'autre, et
une force du ressort de matrice (119) agissant sur la matrice (117) vers un espace intérieur de la chambre de pression (107).

4. Vanne d'arrêt selon l'une des revendications 1 à 3,
le boîtier indicateur (113) comprenant une zone avant (112), et
une taille de la zone avant (112) et une taille du bouchon indicateur (109) étant adaptées l'une à l'autre, de sorte qu'au moins une partie du bouchon indicateur (109) s'insère dans la zone avant (112),
le boîtier indicateur (113) comprenant une zone arrière (114), et
une taille de la zone arrière (114) et une taille d'une extrémité avant du boîtier de rappel (110) étant adaptées l'une à l'autre, de sorte qu'au moins une partie de l'extrémité avant s'insère dans la zone arrière (114).

5. Vanne d'arrêt selon l'une des revendications 1 à 4,
l'élément de fermeture (4) se trouvant à l'intérieur du passage d'écoulement (3),
l'élément de fermeture (4) comprenant une extrémité de base (40) dirigée vers l'entrée (1), et
le ressort (6) d'élément de fermeture se trouvant entre l'extrémité de base (40) de l'élément de fermeture (4) et un socle (11).
